(19) Europäisches Patentamt
European Patent Office
Office européen des brevets

(11) Publication number: **0 588 360 A1**

## (12) EUROPEAN PATENT APPLICATION

(21) Application number: **93115013.0**

(22) Date of filing: **17.09.93**

(51) Int. Cl.5: **B64C 27/00**

(30) Priority: **17.09.92 JP 247696/92**

(43) Date of publication of application:
**23.03.94 Bulletin 94/12**

(84) Designated Contracting States:
**DE FR GB IT**

(71) Applicant: **MITSUBISHI JUKOGYO KABUSHIKI KAISHA**
**5-1, Marunouchi 2-chome**
**Chiyoda-ku**
**Tokyo 100(JP)**

(72) Inventor: **Sato, Akira, c/o Nagoya Aerospace System Works of**
**Mitsubishi Jukogyo K.K.,**
**10, Oe-cho,**
**Minato-ku**
**Nagoya-shi, Aichi-ken(JP)**

(74) Representative: **Henkel, Feiler, Hänzel & Partner**
**Möhlstrasse 37**
**D-81675 München (DE)**

(54) **Less noisy helicopter.**

(57) A less noisy helicopter (1) capable of reducing the level of external noises without any stall or increase in the airframe weight by selecting a lower speed of revolutions for its rotor (2). The helicopter (1) comprises: a turbo-shaft type gas turbine engine (3) having the FADEC (4) and capable of changing its number of revolutions at least two stages during flight; and a rotor (2) made of a composite material. The maximum lift coefficient of said rotor may be no less than a value varying linearly at a ratio of 1.54 to 1.07 to a drag diverging Mach number of 0.8 to 0.9.

Fig. 1

Rank Xerox (UK) Business Services
(3.10/3.09/3.3.4)

BACKGROUND OF THE INVENTION:

Field of the Invention:

The present invention relates to a helicopter and, more particularly, to a less noisy helicopter capable of reducing external noises by changing the number of revolutions of its rotor during flight.

Description of the Prior Art:

In case of flight of a helicopter over an urban district, the problem of noises is more and more stressed to desire a helicopter having a low level of external noises.

Incidentally, the primary source of the external noises of the helicopter is a main rotor, and the secondary one is a tail rotor.

The means available for reducing those external noises are classified into the following (1) to (3):

(1) To reduce the speed of revolutions of the rotor;

(2) To select an optimum combination of the plan shape, wash-out and profile of the leading end portion of the rotor; and

(3) To increase the area of the rotor thereby to decrease the lift loading percentage.

Of these, the most effective one is the means (1).

In the existing helicopter, however, if the number of revolutions of the rotor is reduced, the following problems (a) and (b) arise to cause a practical difficulty.

(a) In case of high-speed flight, the rotor has its retreating blade stalled, and hence it is impossible to realize high-speed flight.

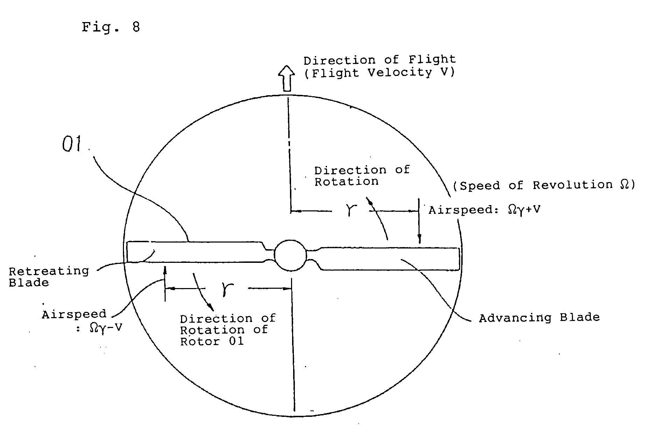

This will be reasoned in the following with reference to Fig. 8. Let is be assumed, in Fig. 8 viewing the top plan of a rotor 01 of the helicopter, that the rotor 01 has a speed of rotation of $\Omega$, that the helicopter has a flight velocity of V, and that the distance from the center of rotation to the vicinity of the lift point of the rotor 01 in the span (or radial) direction is designated at $\gamma$. Then, the airspeed of the rotor 01 at the retreating side is expressed by $(\Omega\gamma - V)$. In order to obtain a necessary lift, on the other hand, the airspeed $(\Omega\gamma - V)$ has to exceed a predetermined value. In order to reduce the value $\Omega$, therefore, the flight velocity V also has to be reduced because the airspeed $(\Omega\gamma - V)$ has to be held over the predetermined value. In short, the flight velocity V has to be reduced if the speed of revolution is reduced.

(b) In case of a low-speed flight, too, the attack angle has to be increased so as to obtain a necessary lift because the airspeed is low for the slow flight. Then, the rotor is locally stalled to generate high vibrations in the fuselage. If the area of the rotor is increased to avoid the stall, the weight of the fuselage will accordingly increase.

In view of the above-specified problems (a) and (b), the efforts of the prior art for reducing the external noises have been devoted mainly to the foregoing means (2) but hardly to the most effective means (1).

The helicopter of the prior art described above has the following problems.

If the helicopter of the prior art selects, with a view to reducing its external noises, the most effective means for reducing the speed of revolutions of its rotor, there arises the aforementioned problem of disabling the helicopter to fly at a high speed. On the other hand, if an attach angle is increased to compensate the shortage of lift which is caused in a low-speed flight, the rotor is locally stalled to generate serious vibrations in the airframe. If the area of the rotor is increased to solve this problem, there arises still another problem that the weight of the helicopter is accordingly increased.

SUMMARY OF THE INVENTION:

In order to solve the above-specified problems, therefore, the present invention has an object to provide a less noisy helicopter which selects the most effective reduction of the speed of revolutions of the rotor for reducing the external noises but can exhibit a high-speed performance while neither causing any stall nor increasing the weight of the fuselage.

(1) In order to achieve this object, according to a feature of the present invention, there is provided a less noisy helicopter which comprises: a turbo-shaft type gas turbine engine having the FADEC and capable of changing its number of revolutions at two or more stages during flight; and a rotor made of a composite material.

(2) According to another feature of the present invention, there is provided a less noisy helicopter which comprises: a turbo-shaft type gas turbine engine having the FADEC and capable of changing its number of revolutions at two or more stages during flight; and a rotor having a maximum lift coefficient no less than a value varying linearly at a ratio of 1.54 to 1.07 to a drag diverging Mach number of 0.8 to 0.9.

(3) In the less noisy helicopter (1), the maximum lift coefficient of said rotor may be no less than a value varying linearly at a ratio of 1.54 to 1.07 to a drag diverging Mach number of 0.8 to 0.9.

In the helicopters (1) and (2), the foregoing letters "FADEC" are an abbreviation of "Full Authority Digital Electronic Control", as currently used in the relevant art. This term means that the fuel control system of the engine is not of the mechanical nor mechanical-digital electronic control type of the prior art but of 100% digital electronic control type. Specifically, the completely digital electronic control type fuel control system incorporates a complicated algorithm to eliminate the manually controlled mechanism resorting to physical feels so that it may satisfy the high performance and the highly sophisticated control of the helicopter of the present day.

In the helicopters (2) and (3), on the other hand, the maximum lift coefficient is a function of the drag diverging Mach number and is exemplified by the specific numerical values for the drag diverging Mach number of 0.8 to 0.9 so as to clarify the functional relation, but it can be applied at the same ratio to a drag diverging Mach number no more than 0.8 and no less than 0.9. In other words, the maximum lift coefficient should not be limited to the range of the drag diverging Mach number of 0.8 to 0.9.

Here, the drag diverging Mach number will be explained in the following. If a flight Mach number of the profile is increased to exceed a certain value, shock waves are established to augment the drag abruptly. The drag diverging Mach number is the Mach number at which the increasing rate (or gradient) of the drag to the increase in the Mach number reaches a certain value (e.g., 0.1). This means that a drag at a high speed is the lower for the higher drag diverging Mach number.

(A) According to the foregoing structure (1), since the helicopter is equipped with a turbo-shaft type gas turbine engine having the FADEC and capable of changing its number of revolutions at two or more stages during flight, a normal flight, if intended, is carried out at such a high number of revolutions as can exhibit a high-speed performance. In case of a flight, in which the problem of external noises is serious, as over the urban district or at the takeoff or landing time when a flight at a low altitude is unavoidable, the number of revolutions has to be changed to a small value effective for reducing the noises in the air (or on the ground). Moreover, since the rotor is made of a composite material, it can be easily given such a characteristic frequency as has no resonant point for both two stages of number of revolutions, that is, higher and lower numbers of revolutions.

(B) According to the foregoing structure (2), the helicopter is equipped with: a turbo-shaft type gas turbine engine having the FADEC and capable of changing its number of revolutions at two or more stages during flight; and a rotor having a maximum lift coefficient no less than a value varying linearly at a ratio of 1.54 to 1.07 to a drag diverging Mach number of 0.8 to 0.9.

Thus, the helicopter can maintain a relatively high lift even if the number of revolutions is changed to the lower value.

(C) According to the foregoing structure (3), the maximum lift coefficient of said rotor is no less than a value varying linearly at a ratio of 1.54 to 1.07 to a drag diverging Mach number of 0.8 to 0.9. In addition to the function (A), therefore, the lift can be maintained at a relatively high level even at a low speed of revolutions.

BRIEF DESCRIPTION OF THE DRAWINGS:

Other objects and features of the present invention will become apparent from the following description to be made with reference to the accompanying drawings, in which:

Fig. 1 is a schematic side elevation showing an essential portion of a less noisy helicopter according to one embodiment of the present invention;

Fig. 2 presents detailed diagrams of a main rotor blade 2 of Fig. 1, of which: (a) a perspective view; (b) a section taken along arrows A-A of (a); (c) a schematic perspective view showing the material of a spar A11 of (b); (d) a schematic perspective view showing the material of a spar B12 of (b); and (e) a schematic perspective view showing the material of a skin 13 of (b);

Fig. 3 is an explanatory diagram illustrating one example of the natural frequency curves of a rotor (blade) according to the embodiment;

Fig. 4 is an explanatory diagram showing a profile of the main rotor blade 2 of Fig. 1;

Fig. 5 is a block diagram showing a control system to be used with the embodiment;

Fig. 6 is an explanatory diagram illustrating the zone of the maximum lift coefficient of the main rotor blade 2 of the embodiment of the present invention, as compared with the prior art;

Fig. 7 is a schematic diagram showing several blade end shapes exemplified as applicable to the end of the main rotor blade 2 of the embodiment; and

Fig. 8 is a schematic top plan view of a rotor of a helicopter for explaining the airspeeds, etc. of the rotor.

DESCRIPTION OF THE PREFERRED EMBODIMENT:

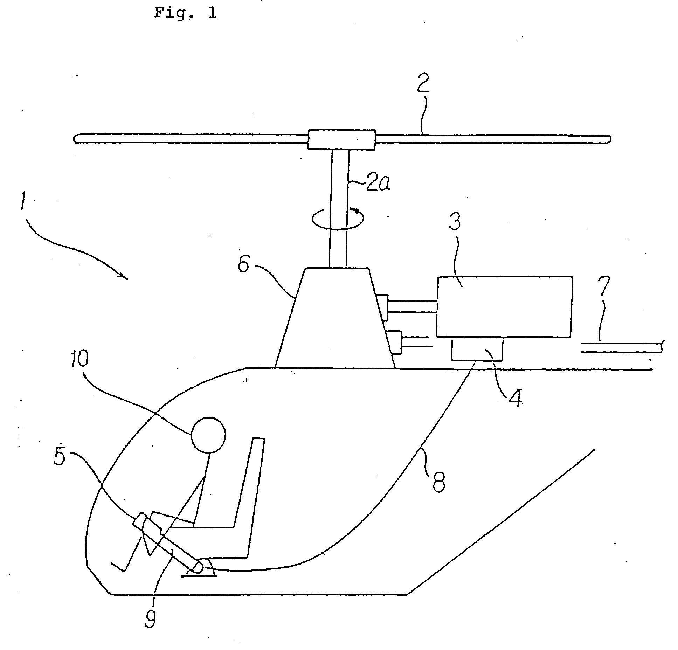

One embodiment of the present invention will be described in the following with reference to Figs. 1 to 7.

First of all, guidelines to the manufacture of the present embodiment will be summarized in the following to facilitate understanding the present invention.

It is in case of flying over the urban district and at a low altitude for takeoff and landing that the helicopter is troubled by the external noises, which raise no substantial problem in other flights.

On the other hand, since no high-speed flight is required over the urban district or for the takeoff or landing, the following two flight modes (1) and (2) can be freely selected even during flight in the present embodiment.

(1) Flight Mode A: Flight in the air district, where the noises raise a problem, such as over the urban district or for the takeoff or landing; and

(2) Flight Mode B: Flight in the air district, where the noises raise no problem, such as at a high altitude or in a local district.

The noise level can be dropped without sacrificing the high-speed performance by the flight at a higher number of revolutions (as will be abbreviated at $N_H$) equal to that of the helicopter rotor of the prior art in the aforementioned flight mode B and by the flight at a lower number of revolutions (as will be abbreviated at $N_L$),which is lower by 15% than the number $N_H$, in the aforementioned flight mode A. This reduction effect of the noise level is estimated by 3 to 5 dB from that of the flight with the number $N_H$.

The speed of revolutions during flight can be changed by changing the output number of revolutions of the engine manually by the control of the pilot.

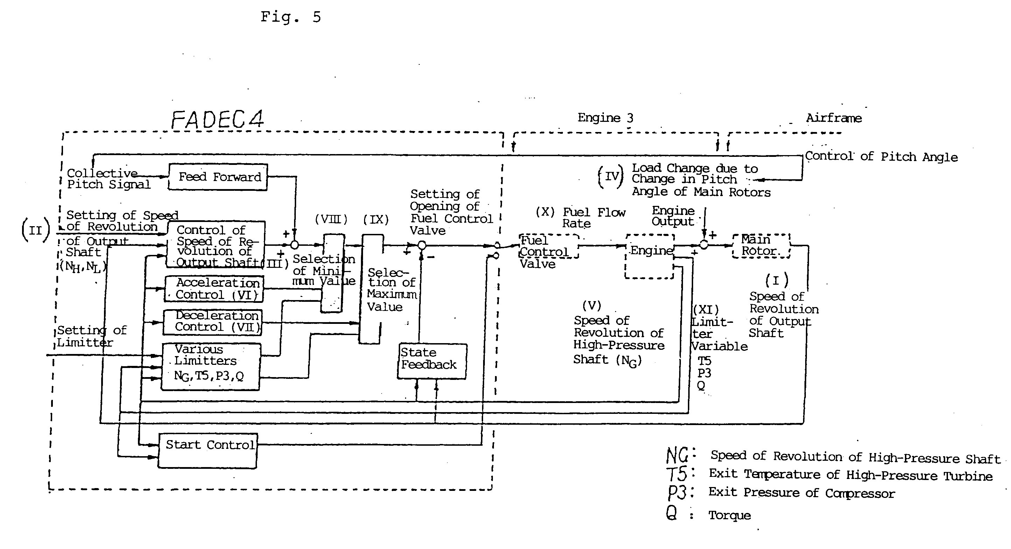

In the existing turbo-shaft gas turbine engine used in the helicopter, the engine has a fuel control system designed to hold the output number of revolutions at a constant value. In the present embodiment, however, there is used a fuel control system (as shown in Fig. 5), which is designed to have the two target numbers of revolutions $N_H$ and $N_L$.

In order that the noise level of the helicopter may be reduced without sacrificing the high-speed performance by "dropping the number of revolutions of the rotor", this number of revolutions of the rotor is changed during flight.

This change in the number of revolutions is effected in combination of the FADEC gas turbine engine which is designed to select the higher number ($N_H$) and the lower number ($N_L$).

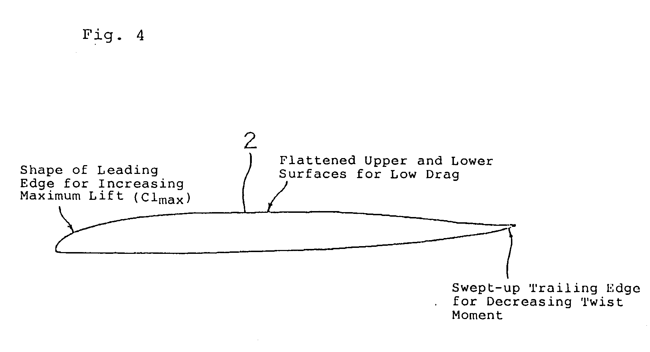

In order to "drop the number of revolutions of the rotor" without any increase in the weight of the airframe, moreover, the rotor used has such a profile (i.e., a profile having a large $Cl_{max}$) as is reluctant to stall even at a high attack angle (as shown in Fig. 4).

Since the rotor is run at the two numbers of revolutions $N_H$ and $N_L$, the rotating system has to be constructed not to resonate no matter which the number of revolutions might belong to. Since this structural requirement is especially severe for the rotor, the rotor used is made of such a composite material as has a high degree of freedom in rigidity and weight.

Incidentally, the fuel control system having the two target numbers of revolutions $N_H$ and $N_L$ without any substantial deterioration in the engine output characteristics is not achieved by the hydro-mechanical type control before the completely digital, control or the FADEC. This is the reason why the FADEC is used.

The change in the number of revolutions by the FADEC is highly reliable without being accompanied by any substantial increase in the weight and cost.

Since the airspeed of the rotor element or blade is lower in the flight at the lower number $N_L$ than that of a normal case (i.e., in the flight at the higher number $N_H$), the profile used is reluctant to cause any stall even at a high attack angle. This relation will be expressed by taking up the flight mode of hovering, as follows:

$$L = 1/2\rho\ (\Omega R)^2 \cdot Cl \cdot S,$$

wherein:

L: Lift,

$\rho$: Density of air,

$\Omega$: Speed of revolution,

R: Radius of the rotor,

Cl: Lift coefficient, and

S: Area of the rotor.

In order to drop the noise level, it is necessary to decrease the value $\Omega R$. If the value S is increased to compensate decreasing the value $\Omega R$, the weight of the airframe is undesirably increased. This makes it necessary to use a profile capable of increasing the lift coefficient Cl.

The advantage of the structure using the composite material resides in that the rigidity can be easily varied by varying how to thread the fibers (e.g., angle, number and kind).

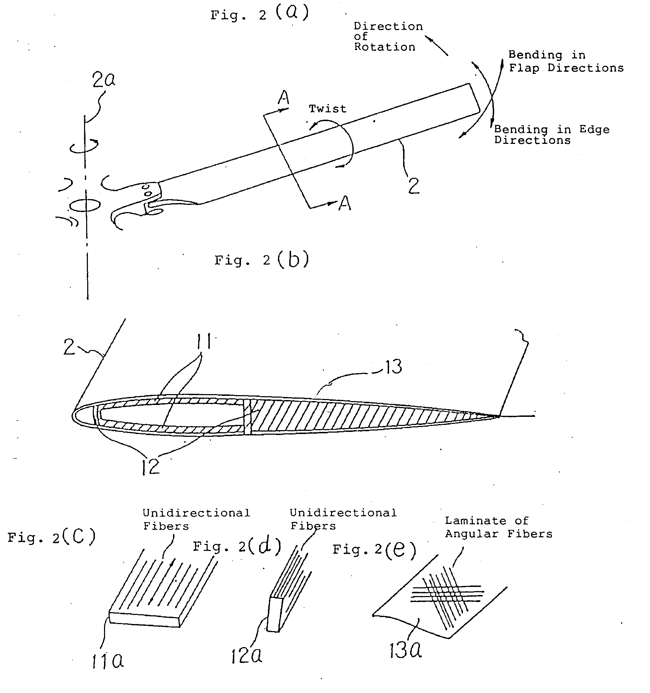

In the present embodiment, by virtue of the structure having the rotor of a composite material, it is possible to give such a natural frequency as can avoid any resonance at the two numbers of revolutions $N_H$ and $N_L$ (as shown in Fig. 2).

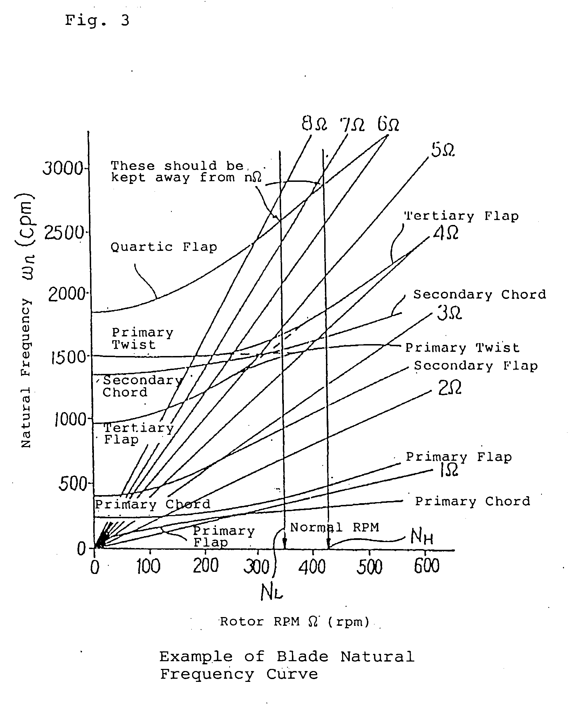

Fig. 3 illustrates one example of the design of the natural frequency arrangement of the rotor.

Here will be specifically described the embodiment with reference to Figs. 1 to 7.

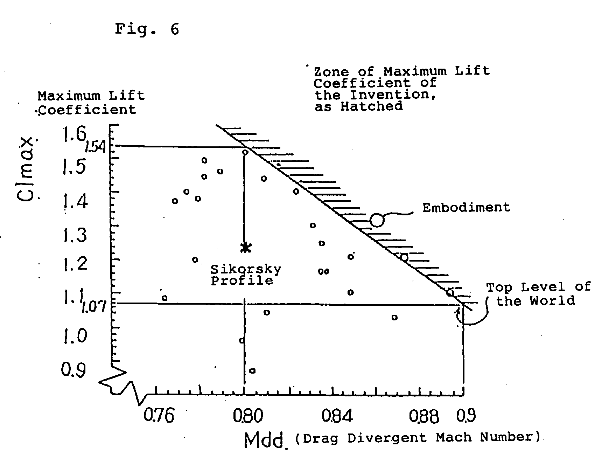

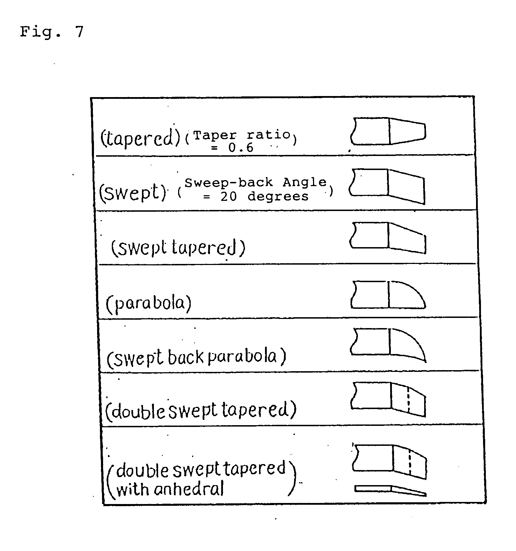

Fig. 1 is a schematic side elevation showing an essential portion of a less noisy helicopter according to one embodiment of the present invention; Fig. 2 presents detailed diagrams of a main rotor blade 2 of Fig. 1, of which: (a) a perspective view; (b) a section taken along arrows A-A of (a); (c) a schematic perspective view showing the material of a spar A11 of (b); (d) a schematic perspective view showing the material of a spar B12 of (b); and (e) a schematic perspective view showing the material of a skin 13 of (b); Fig. 3 is an explanatory diagram illustrating one example of the natural frequency curves of a rotor (blade) according to the embodiment; Fig. 4 is an explanatory diagram showing a profile of the main rotor blade 2 of Fig. 1; Fig. 5 is a block diagram showing a control system to be used with the embodiment; Fig. 6 is an explanatory diagram illustrating the zone of the maximum lift coefficient of the main rotor blade 2 of the embodiment of the present invention, as compared with the prior art; and Fig. 7 is a schematic diagram showing several blade end shapes exemplified as applicable to the end of the main rotor blade 2 of the embodiment.

In Fig. 2, reference numeral 1 designates a less noisy helicopter according to the present embodiment, and numeral 2 designates a main rotor which is made of a composite material and which has such a profile as has a high maximum lift coefficient, as will be hereinafter, and is reluctant to stall. Numeral 2a designates a main rotor shaft extending upward from a main gear box 6 to rotate the main rotor 2. Numeral 3 designates a turbo-shaft type gas turbine engine (which will be shortly referred to as the "engine" hereafter) for rotationally driving the aforementioned main rotor 2 and the not-shown tail rotor selectively at the two stages. Numeral 4 designates the FADEC which is attached to the engine 3 for controlling the fuel supply completely digitally and electronically. Numeral 5 designates a revolution number switch which is provided in a control column 9 for switching the number of revolutions of the engine selectively to the higher number of revolutions $N_H$ or the lower number of revolutions $N_L$. The aforementioned main gear box 6 is interposed between the main rotor 2 and the not-shown tail rotor for reducing the number of revolutions of the engine 3 to transmit a higher torque to the main rotor 2 and the tail rotor. Numeral 7 designates a tail rotor shaft for transmitting the driving power from the main gear box 6 to the not-shown tail rotor. Numeral 8 designates an electric line (or cable) for feeding a switching signal of the revolution number switch 5 to the FADEC 4. The control column 9 is disposed in a cockpit. Numeral 10 designates the pilot.

In Fig. 2, numeral 11 designates a spar A which is made of fibers of a composite material. This spar A is covered with a skin 13 for bearing a bending rigidity mainly in the flap directions (i.e., upward and downward directions). Numeral 11a designates the fibers of a spar A11, as schematically illustrated as partially extracted therefrom so as to show the laminated state of the spar A11. The bending rigidity in the flap directions is determined mainly by the number of unidirectional fibers, i.e., the fibers in the longitudinal directions, as shown. In short, the bending rigidity in the flap directions can be adjusted by changing the number of the fibers 11a of the spar A. As a result, moreover, the bending natural frequency in the flap directions can be adjusted.

Numeral 12 designates a spar B which is made of fibers of a composite material. This spar B contributes not only to maintaining the thickness of the main rotor blade 2 but also the twist (torsion) rigidity and the bending rigidity in the span directions together with the spar A11. Numeral 12a designates the fibers of the spar B12, as schematically illustrated as partially extracted therefrom so as to show the laminated state of the spar B12. The bending natural frequency in the edge directions can be adjusted by changing the number of the fibers 12a.

The aforementioned skin 13 forms the outer surfaces of the main rotor blade 2 and has a tension field contributing to the synthetic strength of the main rotor blade 2, especially, the bending strength and the bending rigidity, and to the twist (torsion) rigidity. Numeral 13a designates the fibers of the skin 13, as schematically illustrated as partially extracted therefrom so as to show the laminated state of the skin 13. The twist (torsion) natural frequency can be adjusted by changing either the number of layers of the fibers or the angle of intersection of the fibers.

As described above, the bending rigidities in the flap directions and in the edge directions and the twist rigidity on the span axis can be adjusted either by changing the numbers of fibers of the spar A11, the spar B12 and the skin 13 or by changing the number of fiber layers. Since the rigidities are factors of the natural frequencies, the natural frequency of the main rotor blade 2 can be adjusted by these rigidities.

One example of preventing the natural frequency of the main rotor 2 from resonating at the two numbers of revolutions $N_L$ and $N_H$ will be described with reference to Fig. 3. The natural frequency $\omega_n$ of the main rotor blade 2 is kept away from an integer N times of the rotor number of revolutions $\Omega$, as shown. In the present embodiment, the number of fibers or fiber layers is so adjusted that the natural frequency $\omega_n$ may not approach the respective integer N times of the numbers $N_L$ and $N_H$ (although the strength and rigidity necessary for the main rotor blade 2 are naturally satisfied). This adjustment of the natural frequency by adjusting the number of fibers or fiber layers is far easier than that of the rotor blade made of a metal according to the prior art.

Next, the main rotor blade 2 is so profiled that the maximum lift coefficient $Cl_{max}$ is increased to cause little stall even at a large attack angle, as shown in Fig. 4. However, it is not sufficient for the helicopter rotor to be profiled to have a high maximum lift coefficient, but the rotor is required to have a low drag and a low aerodynamic twist moment. This requirement is satisfied by the profile of the present embodiment. Here, the value of the maximum lift coefficient $Cl_{max}$ adopted is shown by a circle which is plotted in its hatched zone, that is, a zone of the maximum lift coefficient of the present invention in Fig. 6. Incidentally, a plurality of small circles, as located outside of the hatched zone in Fig. 6, indicates the maximum lift coefficients of the various rotors of the prior art, and a star indicates the maximum lift coefficient of the famous Sikorsky profile. In short, it could be understood that the profile of the present embodiment adopts a far higher maximum lift coefficient than that of the prior art so that it is substantially free from the stall even at the lower number of revolutions $N_L$.

Further, the edge shape of the main rotor blade 2 is not especially limitative but may be selected from a variety of shapes, as shown in Fig. 7, which have been confirmed to be effective for dropping the level of the external noises of the helicopter. No matter what type might be adopted, the noise level is dropped in combination of the noise level drop which is brought by switching the number of revolutions to the lower value $N_L$.

Here will be described the maneuver and operation of the present embodiment having the structure described above.

Deciding the flight situation, the pilot 10 selects the higher or lower number $N_H$ or $N_L$ by means of the revolution number switch 5. The signal of this switch 5 is transmitted through the cable 8 to the FADEC 4 of the engine 3 so that the engine 3 has its output number of revolutions set to the value $N_H$ or $N_L$. The output of the engine 3 is decelerated by the main gear box 6 to drive the main rotor 2 and the not-shown tail rotor. Upon the switching from the higher value $N_H$ to the lower value $N_L$ or vice versa, the FADEC 4 changes the number of revolutions at a rate to allow the pilot 10 to continue the maneuver without difficulty in response to the change in the number of revolutions.

An example of the control of the fuel control system of the engine 3 by the FADEC 4 will be described separately according to the following items with reference to Fig. 5. In this description, the main rotor 2 and the tail rotor will be shortly called together the "rotor".

(1) The engine 3 controls the output shaft speed of rotation (I) to be constant.

(2) If the pilot 10 changes the number of revolutions from the value $N_L$ to the value $N_H$, for example, during flight, this change signal is transmitted via an output shaft revolution speed setting (II) line to an output shaft revolution speed control (III).

(3) This output shaft revolution speed control (III) responds to the change in the number of revolutions to issue: (a) a control signal according to an algorithm, into which are incorporated the output characteristics of the engine 3 itself, such that the output of the engine 3 may not be drastically changed; and (b) a control signal for changing the number of revolutions at a rate for the pilot 10 to respond. Thus, the number of revolutions is switched from the lower value $N_L$ to the higher value $N_H$.

(4) Major disturbances upon the system are the load change (IV) of the rotor.

(5) Due to this load change (IV), the output shaft revolution speed (I) fluctuates.

(6) In order to reduce this fluctuation, the FADEC 4 controls the fuel flow rate to adjust it to the value matching the load of the disturbances.

(7) The higher changing rate of the fuel flow rate at this time would make the output responsiveness the faster but would be troubled, if excessively high, by the surging or blow-off phenomena.

(8) In order to avoid these troubles, an acceleration control (VI) and a deceleration control (VII) are activated in response to the output change to control a speed of revolution ($N_G$) of a high-pressure shaft (V), for example, to a predetermined value or less. Thus, the changing rate of a flue flow rate (X) is limited through a selection of minimum value (VIII) and a selection of maximum value (IX).

(9) The previous item (8) likewise applies to limiter variables (XI) other than the speed $N_G$.

(10) All of these controls are effected by the digital control system having redundancy.

The description made above is directed generally to the case in which the pilot 10 selects the higher or lower value $N_H$ or $N_L$. In case, on the other hand, the helicopter flies from over the sea to over an urban district, for example, the revolution number switch 5 is switched to change the $N_H$ flight to the $N_L$ flight. As a result, the engine 3 is changed to the flight mode of the lower number $N_L$ so that its external noise level is dropped. With this change in the flight mode, as the main rotor 2 has the high maximum lift coefficient, as described above, it is kept away from the stall. On the other hand, the main rotor 2 has its natural frequency adjusted to the range, in which it will not resonate at either of the number of revolutions $N_H$ or $N_L$, so that it generates no detrimental vibration.

Although the description of the rotor has been directed mainly to that of the main rotor 2, the tail rotor may also be made of a composite material to have a high maximum lift coefficient. However, it is arbitrary to select the structure of the prior art for the tail rotor only. At this selection, it is quite natural that the structure should not cause any trouble in the stall or in the mismatch with the number of revolutions.

On the other hand, the main rotor 2 need not satisfy the requirements of both the composite material and the high maximum lift coefficient but may satisfy either of them. If the condition of the high maximum lift coefficient fails, considerations should be taken into the lower revolution number $N_L$ so as to avoid the stall, as has been described hereinbefore in connection with the prior art.

On the other hand, the number of revolutions has been exemplified as switched at the two stages of $N_H$ and $N_L$ but may be switched among three or more stages.

As has been described hereinbefore, according to the present invention, the present embodiment adopts the engine 3 equipped with the FADEC 4 and has an advantage that it can automate the proper fuel control matching the load and the specified number of revolutions without any excessive fluctuation in the number of revolutions, in response to the switching to the higher number of revolutions $N_H$ or the lower number of revolutions $N_L$.

Since the rotor has a high maximum lift coefficient, another advantage is that the rotor does not stall but can drop the external noise level effectively even if it is switched to the lower number of revolutions for the flight over an urban district.

Since the rotor is made of the composite material, still another advantage is that the rotor can be adjusted finely and easily not only in its weight and rigidity but also in its natural frequency so that this frequency can be freed from any resonance with the normal number of revolutions of the helicopter.

Since the stall at the lower number of revolutions is avoided by adopting the high maximum lift coefficient, a further advantage is that the rotor area need not be increased so that the helicopter has no weight increase although it can achieve the low noise level.

Since the rotor is reluctant to stall, a further advantage is that the stall is not caused even at a low airspeed so that the helicopter can fly at a high speed even at a low number of revolutions.

Thanks to the structure described above, the present invention can achieve the following effects (1) to (4).

(1) Since the number of revolutions can be raised if a high-speed flight is desired, the high-speed performance is comparable with that of the ordinary helicopter.

(2) Since the number of revolutions is changed in combination with the engine equipped with the FADEC, this change can be realized without any increase in the weight of the airframe and any deterioration of the cost and reliability.

(3) Since the rotor has a structure made of a composite material and is profiled to be reluctant to stall even at a large attack angle, the rotor can fit, for example, the two stages of higher and lower numbers of revolutions $N_H$ and $N_L$ without any increase in the vibration and weight of the fuselage.

(4) Thanks to the effects described above, it is possible to achieve the intrinsic object of the present invention, that is, to reduce the level of the external noises.

**Claims**

1. A less noisy helicopter characterized in comprising: a turbo-shaft type gas turbine engine having the FADEC and capable of changing its number of revolutions at least two stages during flight; and a rotor made of a composite material.

2. A less noisy helicopter characterized in comprising: a turbo-shaft type gas turbine engine having the FADEC and capable of changing its number of revolutions at least two stages during flight; and a rotor having a maximum lift coefficient no less than a value varying linearly at a ratio of 1.54 to 1.07 to a drag diverging Mach number of 0.8 to 0.9.

3. A less noisy helicopter according to Claim 1, characterized in that the maximum lift coefficient of said rotor is no less than a value varying linearly at a ratio of 1.54 to 1.07 to a drag diverging Mach number of 0.8 to 0.9.

Fig. 1

Fig. 2 (a)

Direction
of
Rotation

Bending in
Flap Directions

2a

A

Twist

Bending in Edge
Directions

2

A

Fig. 2 (b)

2

11

13

12

Fig. 2(C)

Unidirectional
Fibers

Fig. 2(d)

Unidirectional
Fibers

Fig. 2(e)

Laminate of
Angular Fibers

11a

12a

13a

Fig. 3

Example of Blade Natural
Frequency Curve

Fig. 4

Shape of Leading
Edge for Increasing
Maximum Lift ($Cl_{max}$)

2

Flattened Upper and Lower
Surfaces for Low Drag

Swept-up Trailing Edge
for Decreasing Twist
Moment

## Fig. 5

FADEC 4

Engine 3          Airframe

Control of Pitch Angle

Collective Pitch Signal ─── Feed Forward

(IV) Load Change due to Change in Pitch Angle of Main Rotors

Setting of Opening of Fuel Control Valve

(X) Fuel Flow Rate    Engine Output

(II) Setting of Speed of Revolution of Output Shaft $(N_H, N_L)$

Control of Speed of Revolution of Output Shaft

(VIII)  (IX)

(III) Selection of Minimum Value

Acceleration Control (VI)

Deceleration Control (VII)

Selection of Maximum Value

Fuel Control Valve

Engine

Main Rotor

(I)

Speed of Revolution of Output Shaft

(V) Speed of Revolution of High-Pressure Shaft $(N_G)$

(XI) Limitter Variable T5 P3 Q

Various Limitters $N_G, T5, P3, Q$

State Feedback

Setting of Limitter

Start Control

$N_G$ : Speed of Revolution of High-Pressure Shaft
$T5$ : Exit Temperature of High-Pressure Turbine
$P3$ : Exit Pressure of Compressor
$Q$ : Torque

Fig. 6

Maximum Lift Coefficient

Zone of Maximum Lift Coefficient of the Invention, as Hatched

Embodiment

Sikorsky Profile

Top Level of the World

Mdd. (Drag Divergent Mach Number)

Fig. 7

| | |
|---|---|
| (tapered) ( Taper ratio = 0.6 ) | |
| (Swept) ( Sweep-back Angle = 20 degrees ) | |
| (swept tapered) | |
| (parabola) | |
| (swept back parabola) | |
| (double swept tapered) | |
| ( double swept tapered with anhedral ) | |

Fig. 8

Direction of Flight
(Flight Velocity V)

01.

Direction of
Rotation

(Speed of Revolution Ω)

r

Airspeed: Ωγ+V

Retreating
Blade

Airspeed
: Ωγ-V

r

Direction of
Rotation of
Rotor 01

Advancing Blade

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | AVIATION WEEK AND SPACE TECHNOLOGY vol. 131, no. 3 , 17 July 1989 , NEW YORK US pages 75 - 76 E.H. PHILLIPS 'LANGLEY, MC DONNEL DOUGLAS STUDY METHODS OF REDUCING ROTOR NOISE' | 1 | B64C27/00 |
| A | * page 75, right column, line 16 - line 37 * | 2 | |
| A | US-A-4 316 700 (SCHRAMM) * column 2, line 19 - line 29 * * column 2, line 39 - line 50 * * column 3, line 53 - line 56; figure 1 * | 1 | |
| A | JOURNAL OF THE AMERICAN HELICOPTER SOCIETY vol. 26, no. 4 , October 1981 , NEW YORK US pages 31 - 35 KIRALY ET AL 'FABRICATION METHODOLOGY FOR A COMPOSITE MAIN ROTOR BLADE FOR THE YAH-64 ADVANCED ATTACK HELICOPTER' * the whole document * | 1 | |
| A | EP-A-0 392 965 (UNITED TECHNOLOGIES CORP.) * page 2, line 11 - line 12 * * page 2, line 44 - line 50 * * page 3, line 1 - line 2 * | 1,2 | TECHNICAL FIELDS SEARCHED (Int.Cl.5) B64C G05D F02C |
| P,A | EP-A-0 517 467 (FUJI) * page 6, line 55 - page 7, line 27; figure 6 * | 2,3 | |
| A | EP-A-0 262 071 (UNITED TECHNOLOGIES CORP.) * page 7, line 32 - line 45; figure 5 * | 2,3 | |

The present search report has been drawn up for all claims

| Place of search | Date of completion of the search | Examiner |
|---|---|---|
| THE HAGUE | 15 December 1993 | Zeri, A |

EPO FORM 1503 03.82 (P04C01)